# EUROPEAN PATENT SPECIFICATION

(11) **EP 3 844 390 B1**
(45) Date of publication and mention of the grant of the patent: **30.08.2023**
(21) Application number: 19744623.0
(22) Date of filing: 16.07.2019
(51) Int. Cl.: F03D 80/00, F03D 80/50

(54) **WIND TURBINE ENERGY GENERATING UNIT COMPRISING A TOOL FIXTURE**
WINDENERGIEANLAGENGENERATOREINHEIT MIT WERKZEUGAUFNAHME
UNITÉ DE PRODUCTION D'ÉNERGIE ÉOLIENNE AVEC FIXATION D'OUTIL

(30) Priority: 31.08.2018 DK PA201870560
(43) Date of publication of application: 07.07.2021
(73) Proprietor: VESTAS WIND SYSTEMS A/S, 8200 Aarhus N (DK)
(72) Inventor: LANGVARDT KROGH, Lars, 8250 Egå (DK); KOFMAN, Joris, 9220 Aalborg Ø (DK)
(74) Representative: Vestas Patents Department
(86) International application number: PCT/DK2019/050230
(87) International publication number: WO 2020/043249

(56) References cited:
- KR-A- 20130 026 039
- US-A1- 2015 028 703

## Description

### Technical Field

The invention relates generally to wind turbines, and more particularly to an energy generating unit comprising a tool fixture that selectively engages with tools used to remove and replace internal components of the energy generating unit of a wind turbine, while fixing the tools in position against any magnetic forces that would otherwise pull the tools away from the internal components being worked upon.

### Background

Wind turbines are used to produce electrical energy using a renewable resource and without combusting a fossil fuel. Generally, a wind turbine converts kinetic energy from the wind into electrical power. A conventional wind turbine installation includes a foundation, a tower supported by the foundation, and an energy generating unit positioned atop of the tower. The energy generating unit typically includes one or more nacelles to house several mechanical and electrical components, such as a generator, gearbox, and main bearing, and the wind turbine also includes a rotor operatively coupled to the components in the nacelle through a main shaft extending from the nacelle. Single rotor wind turbines and multi-rotor wind turbines (which may have multiple nacelles) are known, but for the sake of efficiency, the following description refers primarily to single rotor designs. The rotor, in turn, includes a central hub and a plurality of blades extending radially therefrom and configured to interact with the wind to cause rotation of the rotor. The rotor is supported on the main shaft, which is either directly or indirectly operatively coupled with the generator which is housed inside the nacelle. Consequently, as wind forces the blades to rotate, electrical energy is produced by the generator. Wind power has seen significant growth over the last few decades, with many wind turbine installations being located both on land and offshore.

As noted above, the nacelle houses several wind turbine components which operate at the top end of the tower to convert kinetic energy from the wind and the rotor blades into electrical energy. Many of these components rotate at varying speeds during use, and as such, over time the components may reach the end of useful life and thereby require repair or replacement. Because the components within the nacelle are separated from the ground by the tall tower, the process and logistics of removing and replacing components of the generator, gearbox, and the like are complex. Moreover, there is often not much excess space within the nacelle, adding to the difficulty of working on or replacing such components of the energy generating unit.

Furthermore, when working on repair or replacement of components located inside the energy generating unit, tools used to remove bolt connections and similar fasteners may be subjected to magnetic forces applied by the permanent magnets mounted within the generator. These magnetic forces may tend to pull the tools (when formed from metal, as is conventional and typical) away from the intended worksite, which increases the difficulty of performing the removal and replacement steps for internal components of the energy generating unit. One potential solution would be to use tools that are not sensitive to magnetic forces, but this is generally undesirable because such tools are highly expensive, if even available with the desired size and strength requirements needed in this context. Therefore, it is desired to fix in position tools being used in assembly and disassembly of energy generating unit components relative to any local magnetic forces applied by elements at the generator.

US2012/0073118 describes a module handling tool for installing and removing modules into or from an electromagnetic rotary machine such as a generator. The module handling tool includes a main body with a support aperture engaged with a rotor mount and a tool receiver such that the module handling tool can move along the rotor mount to move assembly tools into and out of the electromagnetic rotary machine while securing such assembly tools against magnetic forces present within the electromagnetic rotary machine. Further prior art is disclosed in US 2015/028703 A1 and KR 2013 0026039 A.

Accordingly, wind turbine manufacturers, installers and operators are seeking improved options for conducting maintenance and repair on components located within the energy generating unit of modern wind turbine designs.

### Summary

To these and other ends, aspects of the invention are directed to an energy generating unit with a tool fixture for supporting one or more assembly tools that are used to assemble and disassemble components within the energy generating unit of a wind turbine. The tool fixture can advantageously secure the assembly tool(s) and any fasteners worked on from being pulled into magnetic elements of a generator of the energy generating unit. Furthermore, the tool fixture allows for insertion and operation of the assembly tools in the interior of the energy generating unit without requiring an operator to climb into or operate tools against magnetic forces within the energy generating unit. The energy generating unit, tool fixture and associated methods of use provides several technical effects and advantages described in further detail below.

In one embodiment, an energy generating unit for a wind turbine includes a generator and gearbox operatively connected together, the energy generating unit further comprising a supporting structure that extends into the energy generating unit, with at least the generator including internal components that may require assembly and disassembly for repair or replacement. The energy generating unit also includes a tool fixture configured to support one or more assembly tools used to assemble and disassemble the internal components within the energy generating unit. The tool fixture includes a main body with a support aperture engaging the supporting structure that extends into the energy generating unit. The tool fixture also includes a tool receiver configured to secure one of more of the assembly tools against magnetic forces that may be present inside the generator of the energy generating unit. The tool fixture is pivotally movable relative to the supporting structure and this rotation allows the tool fixture to move between a first position sized for moving the tool fixture and the assembly tools along the supporting structure into and out of the energy generating unit, and a second position in which the tool fixture positions the assembly tools to reach and work on fasteners located on components within the energy generating unit.

In a further embodiment, a wind turbine is provided with the energy generating unit and tool fixture described herein.

In a non-claimed embodiment, a tool fixture is configured to support one or more assembly tools used to assemble and disassemble components within an energy generating unit of a wind turbine. The tool fixture includes a main body with a support aperture configured to engage a supporting structure that extends into the energy generating unit. The tool fixture also includes a swing arm including a tool receiver configured to secure one of more of the assembly tools against magnetic forces that may be present inside a generator of the energy generating unit. A pivot joint connects the main body and swing arm to allow the swing arm to rotate relative to the main body. The tool fixture is thus pivotally movable relative to the supporting structure so that the assembly tools secured to the tool receiver may be moved between a first collapsed position in which the tool fixture and the assembly tools can move along the supporting structure into and out of the energy generating unit, and a second extended position in which the tool fixture positions the assembly tools to reach and work on fasteners located on components within the energy generating unit.

In an exemplary embodiment, the support aperture defines a support axis about which the main body can be rotated. In the first collapsed position of the tool fixture, the main body and the swing arm collectively define a reduced radius measured from the support axis, the reduced radius allowing the tool fixture to move along the supporting structure through openings and apertures of the generator and of internal components thereof. In the second extended position of the tool fixture, the main body and the swing arm collectively define an increased radius measured from the support axis, this increased radius being greater than the reduced radius. The second extended position allows the assembly tools carried by the tool fixture to reach and work on the fasteners located on components within the energy generating unit.

In an exemplary embodiment, the tool fixture also includes a swing arm locking mechanism that selectively locks the swing arm from further rotation relative to the main body, to thereby retain the tool fixture in specific positions.

In an exemplary embodiment, the main body further includes a locking element located at the support aperture that actuates to prevent rotation of the main body and the tool fixture relative to the supporting structure. In one example, the locking element is defined by concentric expanding clamp elements that are positioned within the support aperture. The concentric expanding clamp elements extend radially inward from the support aperture to increase frictional engagement with the supporting structure when actuated to prevent rotation of the main body.

In an exemplary embodiment, the tool fixture also includes a counterweight coupled to the main body and configured to cancel rotational moments about the support aperture caused by the main body, the swing arm, and/or the assembly tools. In a further example, the counterweight is mounted in an elongate slot provided on the main body such that the counterweight is movable to account for movements of the swing arm and the assembly tools relative to the support aperture.

In an exemplary embodiment, the swing arm is sized to extend into contact with a stationary structure within the energy generating unit to serve as a torque arm when the assembly tools connected to the tool receiver are torqueing tools. To this end, no separate arm needs to be provided on the assembly tools when using the tool fixture.

In an exemplary embodiment, the main body and the swing arm are both defined by generally planar, elongate link elements.

In an exemplary embodiment, the tool fixture is mounted on a tool chain configured to remove internal components from the energy generating unit. This tool chain may include a tube with a distal tube portion and a proximal tube portion removably coupled to one another, the tube defining a longitudinal length configured to extend into the energy generating unit. The tool chain also includes at least one clamp element located on the distal tube portion and operable to fix the distal tube portion in position relative to internal components of the energy generating unit. A sliding tool is configured to translate alone the tube between the proximal tube portion and the clamp element(s), the sliding tool being configured to be removably secured to internal components of the energy generating unit to move the internal components along the tube and out of the energy generating unit. The tool fixture is also configured to translate along the tube to allow assembly tools to connect and disconnect fasteners of the internal components. The tube serves as the supporting structure engaging with the support aperture of the tool fixture, in such an arrangement.

In a further embodiment, a method of assembling and/or disassembling components of an energy generating unit for a wind turbine with a tool fixture is provided. The energy generating unit includes a generator and a gearbox, at least one of which includes internal components for assembly and/or disassembly when maintenance or repair is required. The method includes providing a supporting structure that extends into the energy generating unit, and coupling an assembly tool to a tool receiver of the tool fixture. The method also includes mounting the tool fixture on the supporting structure by engaging a support aperture of a main body of the tool fixture with the supporting structure, with the tool fixture in a first position in which the tool fixture and the assembly tool are collectively sized to fit through openings and apertures defined by the internal components of the energy generating unit. The method also includes moving the tool fixture along the supporting structure into an interior of the energy generating unit. The tool fixture is then pivoted to place the tool fixture in a second position, in which the assembly tool is positioned by the tool fixture adjacent to fasteners located on the internal components of the energy generating unit to be assembled and/or disassembled. The method further includes using the assembly tool to work on the fasteners, wherein the tool fixture secures the assembly tool and the fasteners against magnetic forces that may be present inside the interior of the energy generating unit

In a non-claimed embodiment, a method of assembling and/or disassembling components of an energy generating unit of a wind turbine with a tool fixture is provided. The method includes providing a supporting structure that extends into the energy generating unit. The method also includes mounting the tool fixture on the supporting structure by engaging a support aperture of a main body of the tool fixture with the supporting structure, the tool fixture being pivotally movable relative to the supporting structure so that assembly tools secured to a tool receiver of the tool fixture may be moved between a first collapsed position and a second extended position. The method further includes pivoting a swing arm of the tool fixture, which includes the tool receiver, relative to the main body of the tool fixture to pivotally move the tool fixture relative to the supporting structure and thereby place the tool fixture in the first collapsed position, in which the tool fixture and the assembly tools can move through openings and apertures defined by components of the energy generating unit. The method also includes moving the tool fixture and the assembly tools in the first collapsed position along the supporting structure into an interior of the energy generating unit. The swing arm is then pivoted relative to the main body to pivotally move the tool fixture relative to the supporting structure and thereby place the tool fixture in the second extended position, in which the tool fixture positions the assembly tools to reach and work on fasteners located on components of the energy generating unit to be assembled and/or disassembled. The method further includes using the assembly tool to work on the fasteners, wherein the tool fixture secures the assembly tool and the fasteners against magnetic forces that may be present inside the interior of the energy generating unit.

### Brief Description of the Drawings

The accompanying drawings, which are incorporated in and constitute a part of this specification, illustrate one or more embodiments of the invention and, together with a general description of the invention given above, and the detailed description given below, serve to explain the invention.
Fig. 1 is a perspective partially cross-sectioned view of an energy generating unit of a wind turbine, including a gearbox and a generator shown in a first configuration, and also showing a tool chain and tool fixture shown in a partially exploded view, the tool chain and the tool fixture configured to work together to assist with assembly and disassembly of internal components of the energy generating unit, in accordance with embodiments of the invention;
Fig. 2 is a perspective view of one embodiment of the tool fixture used with the tool chain and energy generating unit of Fig. 1;
Fig. 2A is a perspective view of another embodiment of the tool fixture of the invention, the tool fixture including a counterweight;
Fig. 3 is a front view of the tool fixture of Fig. 2, with the tool fixture in a first collapsed position configured for movement through the energy generating unit;
Fig. 3A is a front view of the tool fixture of Fig. 3, moved to a second extended position of the tool fixture in which a tool held by the tool fixture is positioned for work at a bolt or other fastener within the energy generating unit;
Fig. 4 is a perspective view of the energy generating unit of Fig. 1, with the tool chain moved to an assembled position with the tool fixture in position on a tube of the tool chain, in one step of a disassembly process;
Fig. 5 is a perspective view of the energy generating unit of Fig. 4, with a support arm of the tool chain unhooked from a distal tube portion and pivoted away from the tube of the tool chain, in a further step of the disassembly process;
Fig. 6 is a perspective view of the energy generating unit of Fig. 5, with the tool fixture moved along the tube while in a first collapsed position so as to fit through openings defined within the generator and into the interior of the generator, in a further step of the disassembly process;
Fig. 7 is a perspective view of the energy generating unit of Fig. 6, with the tool fixture moved to a second extended position to locate a tool in position to work on bolts or other fasteners on internal components of the energy generating unit, in a further step of the disassembly process;
Fig. 8 is a perspective view of the energy generating unit of Fig. 7, with the tool fixture being removed from the tool chain following use, and with a proximal tube portion of the tool chain moved into connection with a distal tube portion to re-assemble the tool chain, in a further step of the disassembly process;
Fig. 9 is a perspective view of the energy generating unit of Fig. 8, with the support arm unhooked from the distal tube portion and pivoted away from the tube of the tool chain, in a further step of the disassembly process;
Fig. 10 is a perspective view of the energy generating unit of Fig. 9, with a sliding tool moved along the tube into connection with a bearing cassette of the generator, in a further step of the disassembly process;
Fig. 11 is a perspective view of the energy generating unit of Fig. 10, with the sliding tool and the bearing cassette pulled away from the generator and next to an end support, in a further step of the disassembly process;
Fig. 12 is a perspective view of the energy generating unit of Fig. 11, with the support arm of the tool chain pivoted back into engagement with the distal tube portion to support the tube, and with the proximal tube portion disconnected from the distal tube portion and moved through the end support to open a gap for release of the bearing cassette, in a further step of the disassembly process; and
Fig. 13 is a perspective view of the energy generating unit of Fig. 12, with the bearing cassette disconnected from the sliding tool so that the bearing cassette can be removed from the nacelle of the wind turbine, in a further step of the disassembly process.

### Detailed Description

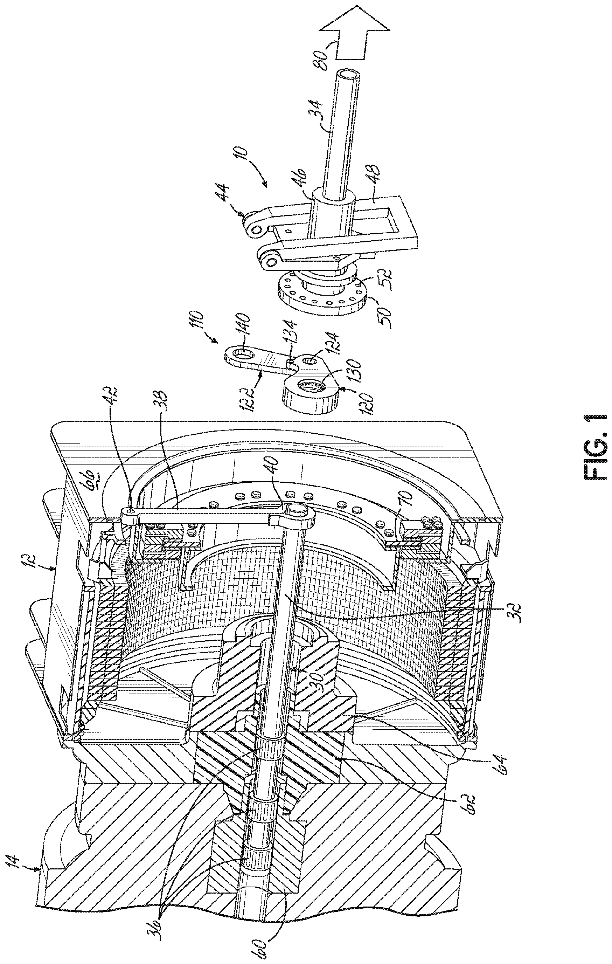

With reference to Figs. 1 through 13 and in accordance with embodiments of the invention, a tool fixture 110 is provided along with an associated method for fixing tools (such as wrenches, screwdrivers, and other torque-generating tools) in position that are used to assemble and disassemble internal components of an energy generating unit of a wind turbine. In this regard, the tool fixture 110 is advantageously configured to hold the tool(s) against magnetic forces present within the interior of a generator 12 of the energy generating unit, e.g., such as those magnetic forces created by permanent magnets typically located in the generator 12. The tool fixture 110 is shown in the illustrated embodiments interacting with a tool chain 10 that includes elements for concentric fixing within the energy generating unit and elements for removal of the internal components in these embodiments, but it will be understood that the tool fixture 110 may be used with other supporting structures in other embodiments. The tool chain 10 and its associated method of use are the subject of a co-pending patent application by the original Applicant of this application, so the description of this tool chain 10 and its method of use are provided in generally concise terms below to provide environmental context for the tool fixture 110 of this invention and how it may be used. The tool fixture 110 advantageously enables tool-based assembly and disassembly of several internal components of elements of an energy generating unit contained within the nacelle of a wind turbine, such that these internal components can be repaired or replaced as needed. This assembly and disassembly can occur without disconnecting the generator from the gearbox and without moving the entire generator down to the bottom of the tower of the wind turbine. These and other advantages of the tool fixture 110 and the associated method(s) will be described in further detail with reference to the drawing views below.

As understood in the art, the wind turbine (at which the tool chain 10 and tool fixture 110 function) includes the tower, the nacelle disposed at the apex of the tower, and a rotor operatively coupled to the generator 12 housed inside the nacelle. In addition to the generator 12, the nacelle houses miscellaneous components required for converting wind energy into electrical energy and various components needed to operate, control, and optimize the performance of the wind turbine, including a gearbox 14 adjacent the generator 12. To this end, the generator 12 and gearbox 14 define part of the energy generating unit for the wind turbine. The tower supports the load presented by the nacelle, the rotor, and other components of the wind turbine that are housed inside the nacelle and operates to elevate the nacelle and rotor to a height above ground level or sea level, as may be the case. Although a single rotor and nacelle are described in this example, it will be understood that the tool fixture 110 may also be used with wind turbines that include multi rotor designs in other embodiments.

Now turning with further reference to Fig. 1, one embodiment of the tool fixture 110 is shown as it may be positioned in one embodiment before assembly with the tool chain 10, which is shown in partially disassembled form and in engagement with the generator 12 and gearbox 14. These environmental elements of the tool chain 10 and the energy generating unit are now described in further detail to provide context for the following detailed description of the tool fixture 110 and its method of use.

To this end, the tool chain 10 shown in Fig. 1 includes a tube 30 that extends along a longitudinal length configured to extend within components of the energy generating unit. The tube 30 is defined by a distal tube portion 32 and a proximal tube portion 34 that are removably coupled to one another by a conical thread, these portions 32, 34 being shown disconnected in Fig. 1. The conical thread engagement provides sufficient stiffness and bending resistance to the joint between the portions, which is beneficial because large heavy components will be moved along the length of the tube 30 when the tool chain 10 is in use. While in the disconnected and separated position shown in Fig. 1, the tool fixture 110 can be moved into the position shown in Fig. 1 such that when the proximal tube portion 34 is moved opposite arrow 80 and back towards engagement with the distal tube portion 32, the tool fixture 110 slides into engagement with the tube 30. The tube 30 of the tool chain 10 thus provides positioning and a support for the tool fixture 110 as it moves into and out of the interior of the energy generating unit.

The distal tube portion 32 of the tool chain 10 includes three concentric expanding clamp elements 36 configured to selectively engage with one or more output shafts of the energy generating unit. The clamp elements 36 are positioned generally at an opposite end of the distal tube portion 32 from its connection to the proximal tube portion 34. The tool chain 10 also includes a support arm 38 including a hook 40 that can engage with the end of the distal tube portion 32 located adjacent to the connection with the proximal tube portion 34. The support arm 38 projects radially outwardly from the tube 30 when the hook 40 is engaged with the distal tube portion 32. An opposite end of the support arm 38 includes a swivel joint 42 configured to be engaged with the housing of the generator 12. The distal tube portion 32 is configured to locate the tool chain 10 in position, and the support arm 38 is configured to provide sufficient support for the tube 30 and any further components mounted on the tube 30, such as the tool fixture 110, when the remainder of the tool chain 10 is disconnected, as in Fig. 1.

The proximal tube portion 34 of the tool chain 10 extends from the removable connection with the distal tube portion 32 to an end support 44 located on an opposite end of the longitudinal length from the clamp elements 36. The end support 44 includes a tube receptacle 46 that slidingly receives a portion of the proximal tube portion 34 therethrough and a frame element 48 configured to be bolted or otherwise secured to the framework of the nacelle to support the tool chain 10 along this end. The tool chain 10 also includes a sliding tool 50 shown located adjacent to the end support 44 in the initial position shown in Fig. 1. It will be appreciated that the end support 44 may be omitted where the tube 30 defines sufficient yield strength and rigidity to support the sliding tool 50 and/or the tool fixture 110 in a cantilevered position extending from engagement at the clamp elements 36. The sliding tool 50 of this embodiment takes the form of a cylindrical flange-like element with various apertures 52 configured to enable bolted connections of the sliding tool 50 to components to be removed or replaced within the energy generating unit of the wind turbine. The sliding tool 50 is sized to translate along the length of the tube 30, just like the tool fixture 110.

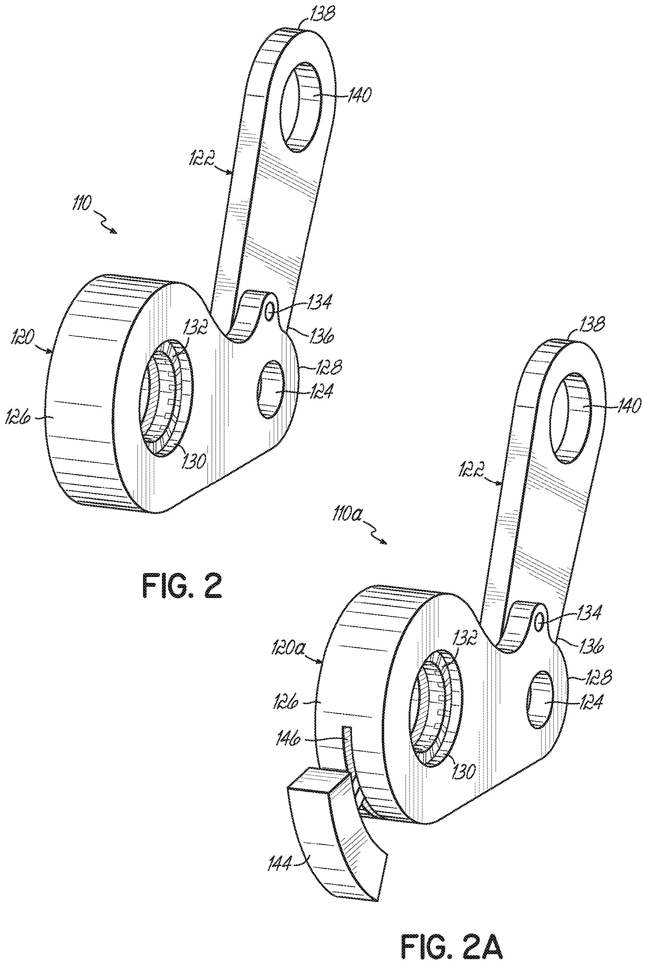

With continued reference to Fig. 1, one example of the energy generating unit of a wind turbine is shown, which is one context in which the tool fixture 110 of the present invention may be used. The energy generating unit is shown in partial cross section and includes the generator 12, which has internal components shown in detail in Fig. 1, and the gearbox 14, which is mostly shown in "black box" cross section in Fig. 1. In this wind turbine, the gearbox 14 includes a first output shaft 60 and a second output shaft 62, the first of which defines a central pinion of a planetary gear assembly in the gearbox 14 and the second of which defines a planetary gear in a similar/adjacent assembly (e.g., the output shafts 60, 62 are part of two different stages in the gearbox 14). Thus, it will be appreciated that the second output shaft 62 is not designed to support itself when disengaged from other components of the energy generating unit. The second output shaft 62 removably engages a bearing cassette 64 located at the junction between the gearbox 14 and the generator 12 as shown in Fig. 2. The second output shaft 62 and the bearing cassette 64 define where rotational speeds (increased by the gearbox 14) are greatest within the wind turbine, to harvest the greatest amount of electrical energy from the input rotation from the ambient wind. Accordingly, the bearing cassette 64 is often one of the first components in the energy generating unit to reach a fatigue limit and need repair or replacement. The tool fixture 110 is configured to assist with removal of the bearing cassette 64, as set forth below.

The components of the generator 12 include a main housing 66 having an end cap (already removed and not shown in Fig. 1) configured to close off access to the interior components during normal operation. A central portion of the end cap may project inwardly and sit within a brake disc 70 of the generator 12. The brake disc 70 interacts with the rotor components of the generator 12, which are operatively coupled to the second output shaft 62 using a drive flange (already removed and not shown in Fig. 1). The drive flange is located between the brake disc 70 and the bearing cassette 64. Thus, elements such as the end cap and the drive flange may need to be removed before additional internal components such as the bearing cassette 64 can be accessed, and it will be understood that the tool chain 10 and the tool fixture 110 may be used to assist with removal and replacement of those elements as well. The generator 12 also includes one or more permanent magnets to help convert rotational energy into electrical energy, and these permanent magnets typically produce significant magnetic forces which can affect elements inserted into the interior of the energy generating unit, such as tools used for assembly and disassembly.

As set forth above, the tool fixture 110 advantageously fixes such tools in position against these magnetic forces that are present within the generator 12. The tool fixture 110 is now described in further detail with reference to Fig. 2. The tool fixture 110 includes a main body 120 and a swing arm 122 coupled to one another at a pivot joint 124. Although a bolt or similar joint element is not shown at the pivot joint 124 in Fig. 2, it will be understood that any such fastener allowing relative rotational movement of the swing arm 122 to the main body 120 may be provided to help define the pivot joint 124 in this embodiment. The tool fixture 110 and these components thereof may be provided in tool steel or aluminum material in these embodiments.

Both the main body 120 and the swing arm 122 are designed as elongate, generally planar links extending between first and second ends, with these ends being configured for connection to one another or other elements as now described in detail. In this regard, the main body 120 includes a first end 126 configured to be mounted to a supporting structure and a second end 128 configured to be connected to the swing arm 122. The first end 126 of main body 120 includes a support aperture 130 that receives a tube, rod, or some similar type of supporting structure for carrying the tool fixture 110. In the exemplary embodiment using the tool chain 10, the tube 30 of the tool chain 10 is received within this support aperture 130. The support aperture 130 is sized to receive the corresponding supporting structure that the tool fixture 110 is to be used with. The main body 120 also includes a selectively expandable locking element 132 within the support aperture 130 that can expand radially inwardly to lock the tool fixture 110 in position on the tube 30 or other supporting structure. The locking element 132 may be mechanically, electrically, or hydraulically actuated as will be readily understood in the art (to this end, the locking element 132 functions similarly to the clamp elements 36 of tool chain 10). The locking element 132 can be retracted to allow for the tool fixture 110 to move laterally along the length of the tube 30.

The second end 128 of main body 120 includes the pivot joint 124 for connecting to the swing arm 122. Moreover, the second end 128 also includes a swing arm locking mechanism 134 located proximate to the pivot joint 124. Although the swing arm locking mechanism 134 is shown as an aperture in the second end 128 in this Fig. 2, it will be appreciated that the swing arm locking mechanism 134 also includes a pin or similar element that extends through this aperture and into operational engagement with the swing arm 122. For example, the pin or similar element may be spring-biased towards interaction with the swing arm 122. To this end, the pin or similar element can frictionally engage or be inserted into corresponding apertures (not shown) in the swing arm 122 to prevent relative pivotal movement of the swing arm 122 to the main body 120 about the pivot joint 124. As such, the swing arm locking mechanism 134 allows fixture of the swing arm 122 in various positions relative to the main body 120, thereby enabling the tool fixture 110 to define various positions including a first collapsed position and a second extended position described in further detail below.

The swing arm 122 includes a first end 136 configured to be connected to the main body 120 and a second end 138 configured to support a tool to be used within the energy generating unit of the wind turbine. The first end 136 of swing arm 122 includes the pivot joint 124 and the corresponding structures (if present) for interacting with the swing arm locking mechanism 134 of the main body 120. The second end 138 of swing arm 122 includes a tool receiver 140, which is shown in this illustrated embodiment as an aperture. It will be understood that the tool receiver 140 may include locking or gripping structures for positively retaining the tool in position on the tool fixture 110, or in alternative embodiments, the tool may include structure for locking in position on the tool receiver 140. Regardless of the configuration of the tool, the tool receiver 140 is configured to position the tool for use in assembling or disassembling internal components of the energy generating unit, while securing retaining the tool against magnetic forces that may be present in these work environments within the wind turbine.

One alternative embodiment of the tool fixture 110a in accordance with this invention is shown in Fig. 2A. The tool fixture 110a of this embodiment is substantially similar to the tool fixture 110 shown in Fig. 2 and includes many of the same elements, which have the same reference numbers applied without further description herein where elements are unchanged from those described above. The tool fixture 110a includes a modified main body 120a in this embodiment that includes a counterweight 144 located along the first end 126 of main body 120a. The counterweight 144 is configured to balance out rotational moments that would otherwise be present about the support axis of tool fixture 110a (e.g., about the support aperture 130) as a result of the weight of the main body 120a, the swing arm 122, and any tool that is connected to the swing arm 122 at tool receiver 140. It will be understood that these elements are typically formed from heavy materials such as tool steel and/or aluminum, so the counterweight 144 avoids the need to apply additional torque and forces to hold the tool fixture 110a and the tool in the desired position.

As set forth above, the tool fixture 110a is moveable between various positions to allow for the main body 120a and swing arm 122 to be moved into the generator 12 and hold the tool in necessary positions for assembly and disassembly of energy generating unit components. As the swing arm 122 and tool pivot about the pivot joint 124, the rotational moments applied by the tool fixture 110a would be modified. Consequently, the counterweight 144 in the embodiment shown in Fig. 2A is provided as a moveable counterweight 144 such as by being mounted in an elongate slot 146 extending around the first end 126 of main body 120a. The counterweight 144 can be moved mechanically, electrically, or hydraulically, as will be readily understood by those skilled in the art of tooling. In such an embodiment, when the swing arm 122 moves relative to the main body 120a, the counterweight 144 can also be adjusted in position to maintain the canceling of rotational moments about the support axis defined at support aperture 130. The counterweight 144 therefore improves the functionality of tool fixture 110a when used in positions remote from a human operator, such as within the interior of generator 12. Although the counterweight 144 is not shown in the Figures described below showing use of the tool fixture 110 (for illustration simplicity), it will be appreciated that the counterweight 144 can be provided in those use examples without departing from the scope of this invention.

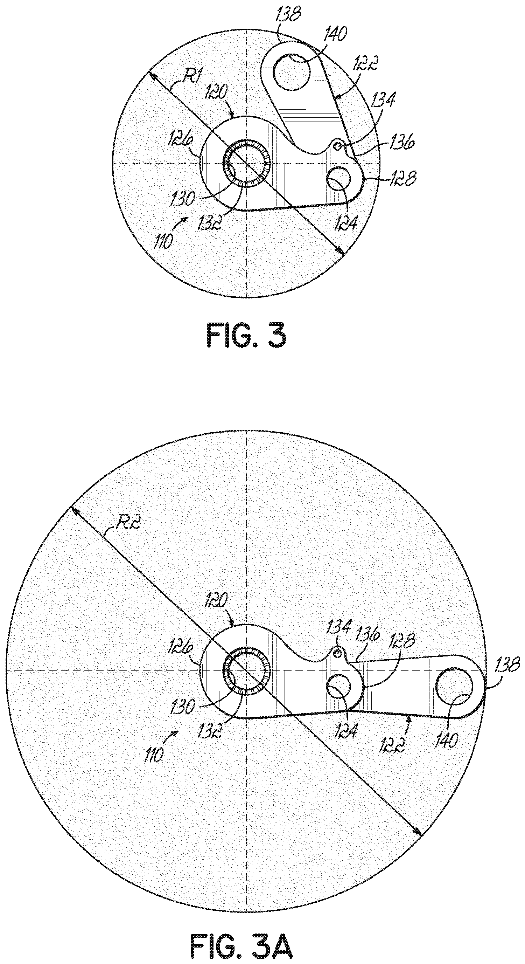

Now turning with reference to Figs. 3 and 3A, the tool fixture 110 is shown in various operational positions. More specifically, the tool fixture 110 is moved to a first collapsed position configured for movement through the energy generating unit in Fig. 3, and then moved to a second extended position in Fig. 3A. As set forth above, the swing arm locking mechanism 134 may be used to retain the swing arm 122 and main body 120 in these positions, as well as in many other intermediate positions not shown in these Figures. In the first collapsed position of Fig. 3, the entire tool fixture 110 defines a reduced radius R1 (measured from the support axis defined at the support aperture 130) that is configured to fit through small clearances and apertures defined by some internal components of the energy generating unit. For example, with reference back to Fig. 1, the tool fixture 110 in the first collapsed position can move along the tube 30 through the opening defined by the brake disc 70. The size of the components of the tool fixture 110 may be modified from the example shown in this illustrated embodiment to vary the reduced radius R1 in circumstances where smaller clearances are provided into the interior of the generator 12.

In the second extended position of Fig. 3A, the entire tool fixture 110 defines an increased radius R2 (again measured from the support axis defined at the support aperture 130) that allows positioning of the tool receiver 140 and the corresponding assembly tool anywhere within the larger circle defined by increased radius R2. This positioning is enabled by rotation of the main body 120 (and the entire tool fixture 110) about the support aperture 130 in combination with pivotal movement of the swing arm 122 relative to main body 120. This larger circle may be significantly larger than the clearance provided by opening in elements like the brake disc 70. For example, the increased radius R2 may be twice as large or larger than the reduced radius R1 defined by the first collapsed position of tool fixture 110. By allowing the tool carried by the tool fixture 110 to work anywhere in the larger circle, the tool can function on bolts or nuts defining larger bolt circles on some internal components than the clearance provided by other internal components of the energy generating unit. Accordingly, the tool fixture 110 both provides for accurate positioning and fixing of assembly tool(s) in position within the energy generating unit, while accurately holding these assembly tool(s) against magnetic forces present in the generator 12. The tool fixture 110 avoids the need for human operators to manually hold tools in this environment against the magnetic forces, which improves the safety and reliability of performing repair or replacement of wind turbine components.

Having described various embodiments of the tool fixture 110, 110a of this invention, one method of use for the tool fixture 110 will now be explained with respect to the example shown in Figs. 1 and 4-7. In this example, the tool fixture 110 is supported by and interacts with the tool chain 10 to assist with assembly and/or disassembly of the energy generating unit of the wind turbine. In Fig. 1, the tool fixture 110 is positioned for assembly with the tool chain 10. In this regard, the support aperture 130 is aligned with the tube 30, which is separated by disconnecting the distal tube portion 32 from the proximal tube portion 34 and moving the proximal tube portion 34 away from the distal tube portion 32 (as shown by arrow 80) through end support 44 to open a gap in which the tool fixture 110 can be positioned. The support arm 38 is engaged with hook 40 to the distal tube portion 32 in this configuration, and the clamp elements 36 on the distal tube portion 32 are locked in position relative to the first and second output shafts 60, 62 of the gearbox 14.

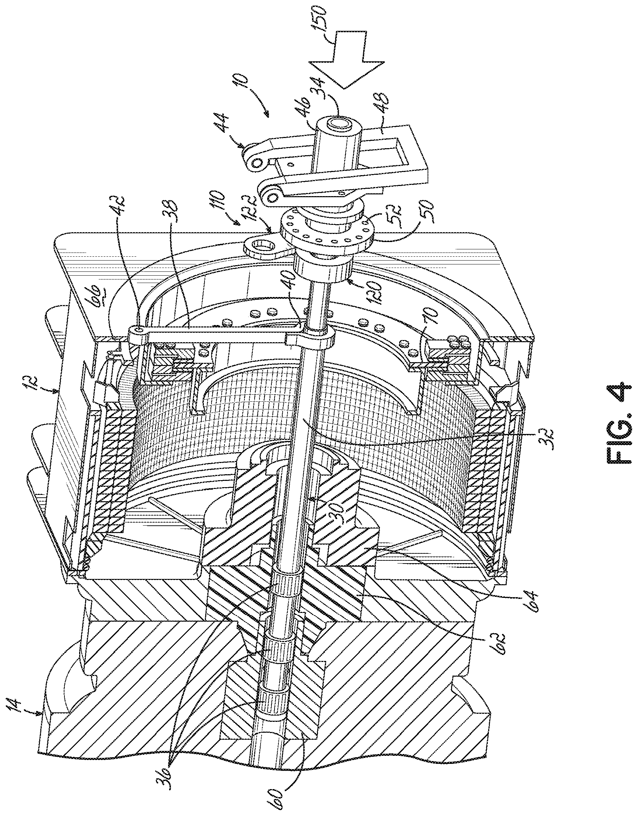

In Fig. 4, the proximal tube portion 34 of tool chain 10 is then moved as shown by the arrow 150 back towards the distal tube portion 32 and then connected to form the tube 30. During this movement, the proximal tube portion 34 is inserted through the support aperture 130 of main body 120 and the tool fixture 110 is thus mounted upon and supported by the tube 30. The locking element 132 can be used to secure the tool fixture 110 in a position on the tube 30, but as set forth in further detail below, this may not be necessary because the tool fixture 110 will typically be moved along the length of the tube 30 in a subsequent step. The tool fixture 110 is typically configured to be in the first collapsed position for this step, in view of the subsequent movement to be performed into the energy generating unit.

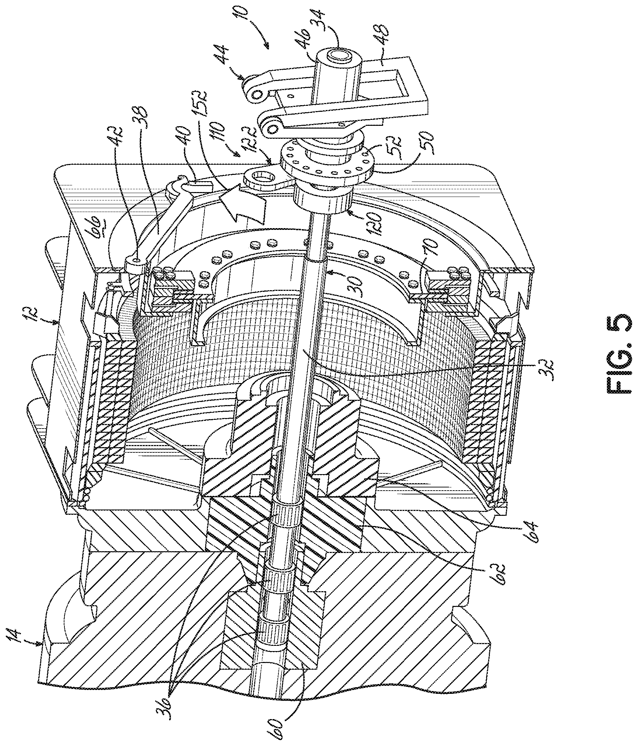

Continuing to Fig. 5, the support arm 38 is then disconnected from the tube 30 and pivoted away from the tube 30 at the swivel joint 42, as shown by the arrow 152 in this Figure. To this end, the hook 40 includes a release mechanism that quickly moves the hook 40 between a locked position engaged with the distal tube portion 32 and an unlocked or open position. The support arm 38 or hook 40 can be temporarily engaged with the main housing 66 of the generator 12 to retain the support arm 38 in the position shown in Fig. 5 during the following steps of the process. In this position, the first and second output shafts 60, 62 are supported in position by the clamp elements 36 on the tube 30 of tool chain 10, and the tube 30 is now generally unimpeded along its length so that the tool fixture 110 can move into the generator 12.

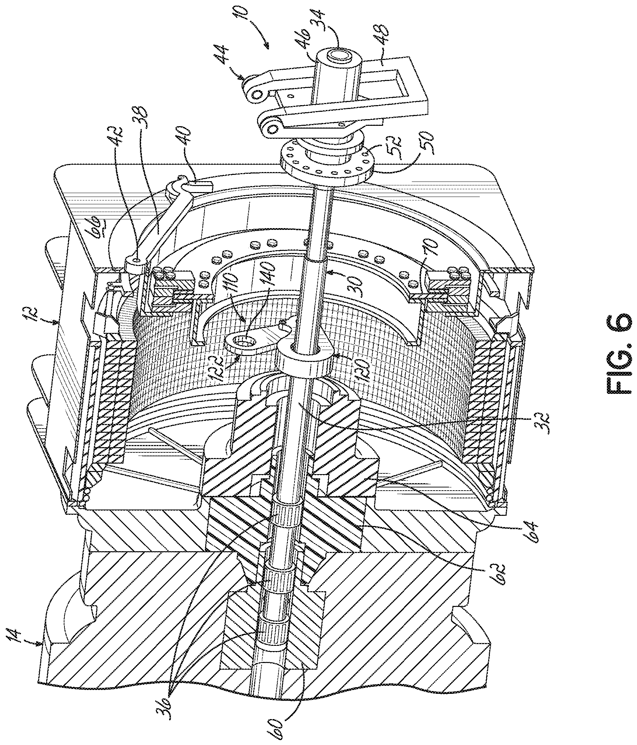

Such movement of the tool fixture 110 into the interior of generator 12 is shown in Fig. 6. In this regard, the locking element 132 is released or moved to a non-locking position and the tool fixture 110 at support aperture 130 translates or slides along the tube 30 from adjacent the end support 44 to a position adjacent a first internal component to be disconnected and removed from the generator 12, which in the illustrated example is the bearing cassette 64. The tool fixture 110 is maintained in the first collapsed position during the translation movement so that the tool fixture 110 and any tool connected to the tool receiver 140 fit through openings provided in other internal components of the generator 12 (e.g., such as brake disc 70). The tool fixture 110 is then in position for the tool to work on removal of another internal component of the energy generating unit, such as the bearing cassette 64.

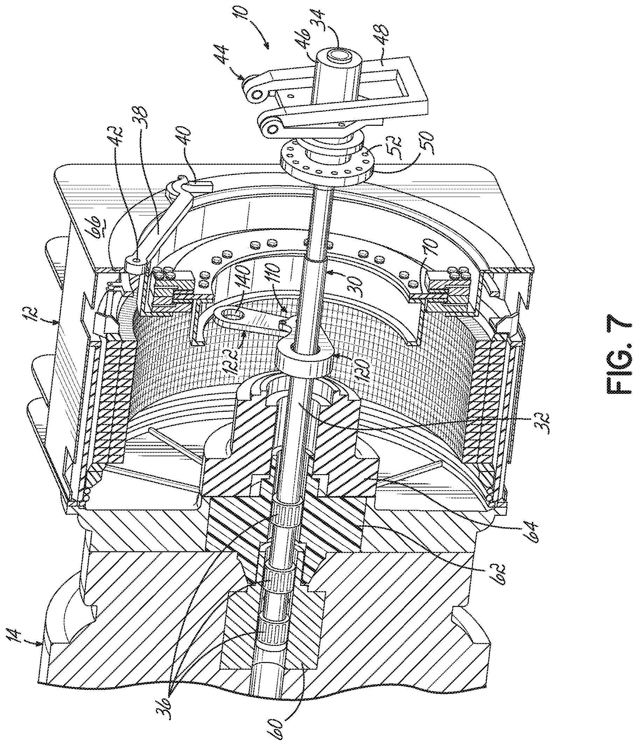

It is often the case that internal components like the bearing cassette 64 are secured in position using bolts, nuts, or other fasteners that define a bolt circle larger than the opening through elements such as brake disc 70. Thus, as shown in Fig. 7, the tool fixture 110 is moved into a second extended position by pivoting the swing arm 122 relative to main body 120 following the movement into the interior of the generator 12. To this end, the swing arm locking mechanism 134 is released or unlocked so that the swing arm 122 can pivot the tool at the tool receiver 140 into a desired position for working on the fasteners of the internal component, at which point the swing arm locking mechanism 134 is locked again to hold the swing arm 122 in position. Likewise, the locking element 132 at the support aperture 130 may also be released temporarily to allow for rotation of the entire tool fixture 110 about the tube 30 to properly locate the tool on the tool receiver 140. In embodiments including a counterweight 144, it will be understood that the counterweight 144 is also moved at this time when the tool fixture 110 is repositioned and reconfigured for use within the generator 12.

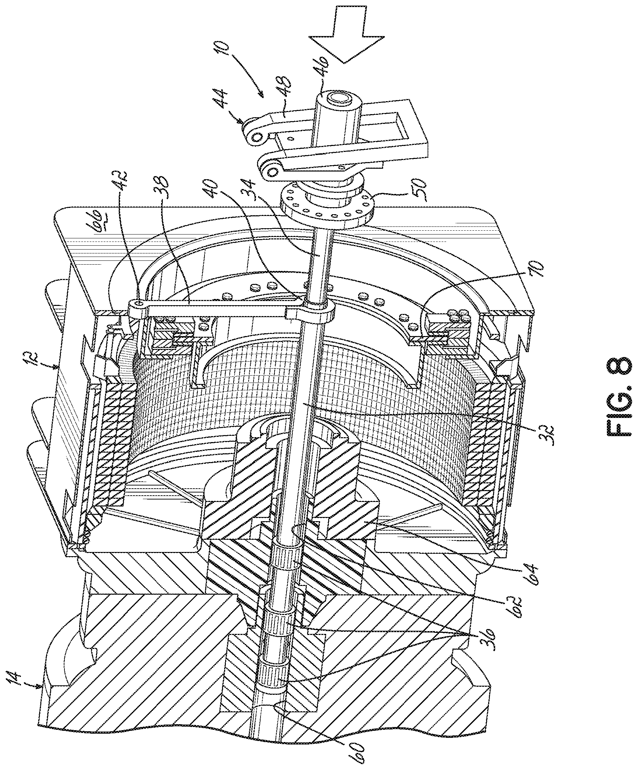

The tool(s) held by the tool fixture 110 are then ready for use to assemble or disassemble fasteners from an internal component such as the bearing cassette 64. Advantageously, the tool fixture 110 supports the tool at the tool receiver 140 in the correct radial position to work on any individual fasteners on the bearing cassette 64, while securing the tool and any individual fasteners from being drawn outwardly by the magnetic forces applied by permanent magnets and the like within the generator 12. The tool on the tool fixture 110 can therefore be used for various assembly and disassembly tasks within the energy generating unit without necessitating a human operator to climb into the interior of generator 12 and/or hold these tools and fasteners against the magnetic forces therein. For example, the tool held by tool fixture 110 can be used to connect or disconnect various internal components from the gearbox 14 and generator 12, and the tool held by tool fixture 110 can also be used to assemble the generator 12 to the gearbox 14 when connection or disconnection of those elements of the energy generating unit is necessary. Once the work on the fasteners or similar elements is completed by the tool, the tool fixture 110 can again be moved to the first collapsed position and withdrawn from the interior of generator 12 by reversing the steps described above with respect to Figs. 4-7. Other elements of the tool chain 10 can then be used to secure and remove the internal component(s) released by the work of the tool on the tool fixture 110, and this process is explained below with reference to Figs. 8-13 for additional context.

Before describing those additional steps of the tool chain 10, several further features and technical effects of the use of the tool fixture 110 according to this invention are now described. Some of the assembly tools that may be used inside the energy generating unit are so-called torqueing tools, which are often hydraulically actuated, and these torqueing tools typically are provided with a separate L-shaped arm for engaging with an adjacent bolt to provide a torque arm when using the tool. The tool fixture 110 improves the use of these torqueing tools because the swing arm 122 can serve as the torque arm instead of providing the separate piece, while it also positions and supports the torqueing tool. To this end, the swing arm 122 can be positioned in contact with another bolt or some other fixed surface to provide support needed for such tools to apply torque, as is desired in some assembly and disassembly circumstances.

The tool fixture 110 according to this invention therefore allows for assembly tools of various types to be securely held and used within the magnetic fields present inside the generator 12 of a wind turbine's energy generating unit. The tool fixture 110 accomplishes this use of assembly tools in such a manner that a human operator does not need to hold the tools against the magnetic forces, nor does the human operator need to work against moment and magnetic forces that would otherwise be applied in the absence of the tool fixture 110. The tool fixture 110 transports and operates assembly tools in and out of the energy generating unit, and the changeable positions of the tool fixture 110 assures that the assembly tools held by the tool fixture 110 can access all bolts and fasteners that are used to connect the gearbox 14 to the generator 12, or to connect internal components to one of these elements of the energy generating unit. Furthermore, these benefits and technical effects are achieved in all contexts where work inside a generator 12 or other part with magnetic fields is conducted, not just when these elements are in a nacelle at the top of a wind turbine as shown in the examples herein. Consequently, maintenance and repair actions on energy generating units is improved by providing and using the tool fixture 110 of this invention.

Figs. 8-13 illustrate a series of steps performed by the tool chain 10 for removing an internal component such as the bearing cassette 64 from the energy generating unit, which is possible after the steps described above using the tool fixture 110 to remove any bolt or fastener connections of the bearing cassette 64. After the tool fixture 110 is removed from the interior of the generator 12 following the use as shown in Fig. 7, the tube 30 of the tool chain 10 can be disassembled by uncoupling the distal tube portion 32 from the proximal tube portion 34. Movement of the proximal tube portion 34 opens a gap through which the tool fixture 110 can be removed, which opens a pathway for the sliding tool 50 to move into the generator 12. The proximal tube portion 34 is recoupled to the distal tube portion 32 (by using conical threads or the like) as shown in Fig. 8 following removal of the tool fixture 110. The tool chain 10 is thus assembled again and ready to remove internal components of the generator 12 and/or the gearbox 14.

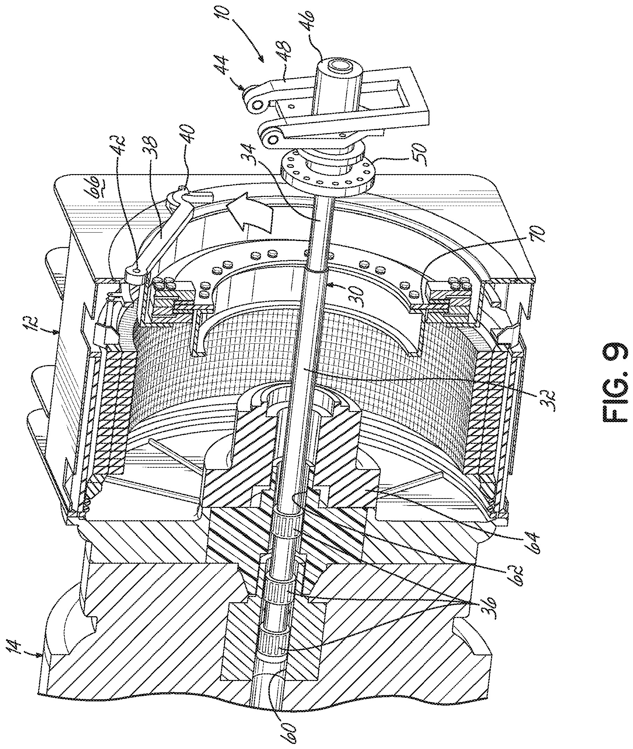

To this end, the process is continued as shown in Figs. 9 through 13 to remove the bearing cassette 64 from the generator 12. Starting with Fig. 9, the support arm 38 is disengaged from the tube 30 at the hook 40 (using the release mechanism) and pivoted around the swivel joint 42, as shown by the arrow in this Figure, out of the path of movement into the generator 12. The sliding tool 50 is then free to move into the interior of the generator 12.

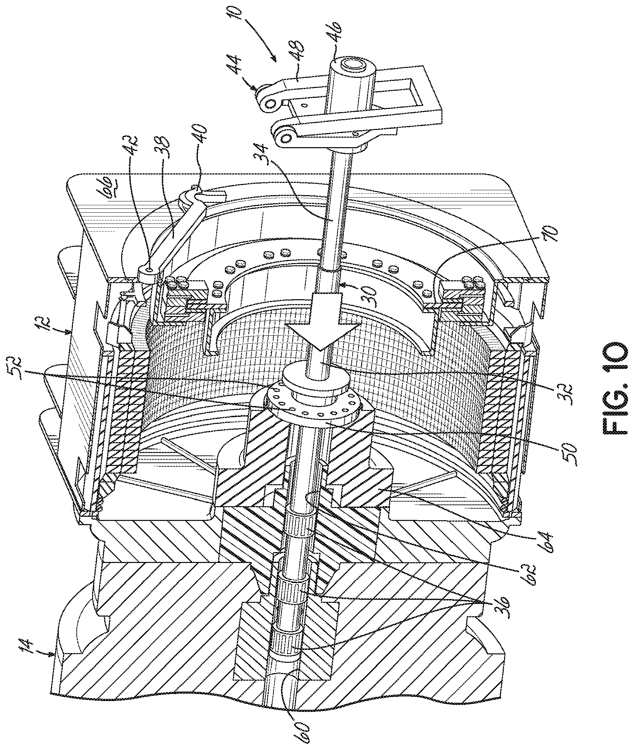

Next, the sliding tool 50 slides along the longitudinal length of tube 30 and into engagement with the bearing cassette 64 as shown by the arrow in Fig. 10. The sliding tool 50 can be secured to the bearing cassette 64 (the component to be removed) using bolts or similar fasteners extending through the apertures 52 of the sliding tool 50. In some embodiments, the tool fixture 110, not shown in this Figure, can be mounted proximally from the sliding tool 50 on the tube 30 so that the tool fixture 110 carries tools into the generator 12 for assembling the sliding tool 50 to the bearing cassette 64. However, other tools can be used for securing the sliding tool 50 in other embodiments. The bearing cassette 64 has previously been disconnected from other internal components within the generator 12 and/or gearbox 14 that it interacts with, thereby releasing the bearing cassette 64 for removal by the sliding tool 50 of tool chain 10.

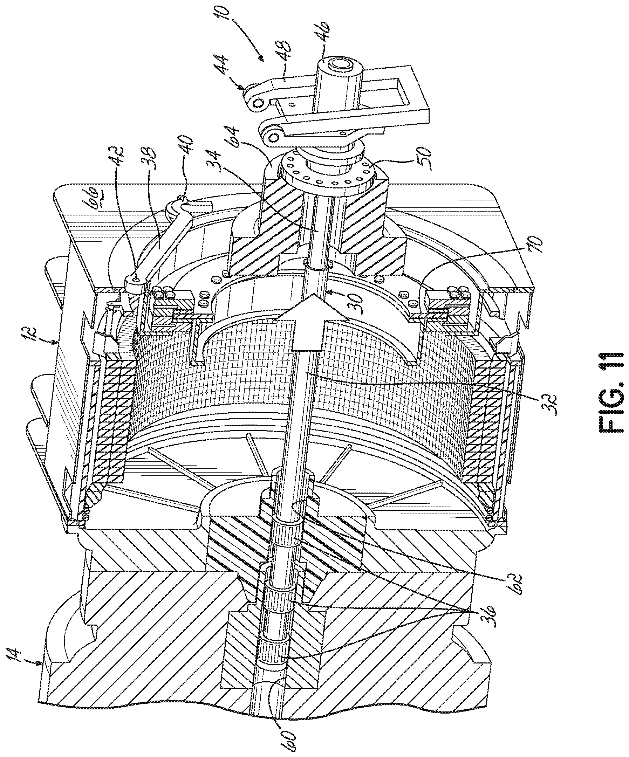

Turning with reference to Fig. 11, the sliding tool 50 then moves along the tube 30 to move the bearing cassette 64 away from the gearbox 14 and out of the generator 12 to a position adjacent the end support 44 (see the arrow in Fig. 11). As noted above, the bearing cassette 64 of the illustrated embodiment is sized to fit through the rotor components and the brake disc 70 of the generator 12, but in alternative designs where the bearing cassette 64 is larger in size, those other internal components may also be removed by the tool chain 10 and/or tools held by the tool fixture 110 using similar series of steps as the ones described above. In the position shown in Fig. 11, the bearing cassette 64 is positioned for removal and replacement.

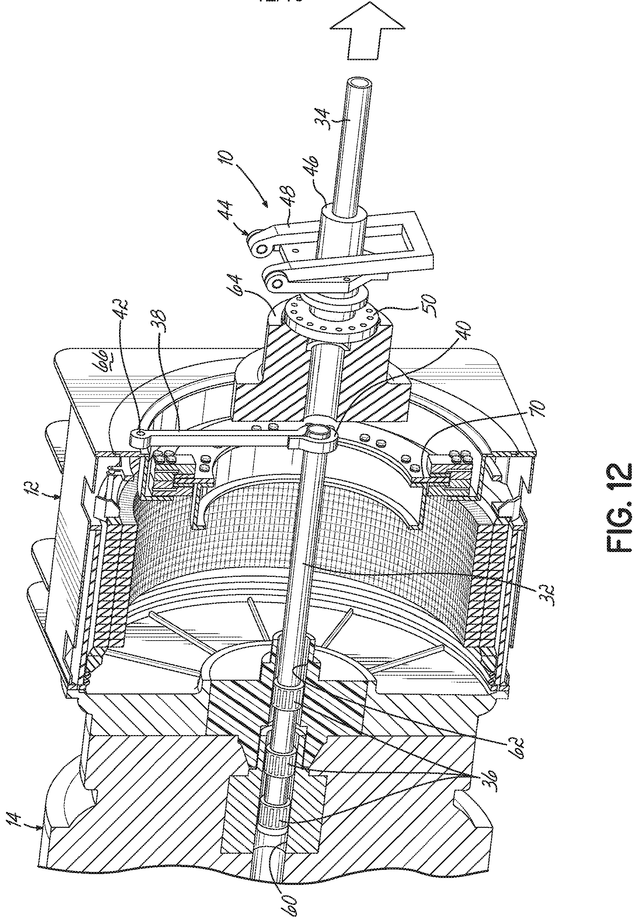

As shown in Fig. 12, the next steps of the process include pivoting the support arm 38 about the swivel joint 42 back into engagement with the distal tube portion 32 and securing these elements together with the hook 40. The distal and proximal tube portions 32, 34 are then disengaged at the conical threads so that the proximal tube portion 34 can be moved in the direction of the arrow in Fig. 12 to be withdrawn through the tube receptacle 46 at the end support 44. As can be seen from Fig. 12, this opens the gap again between the portions of the tube 30, allowing for movement of the bearing cassette 64 out of the nacelle.

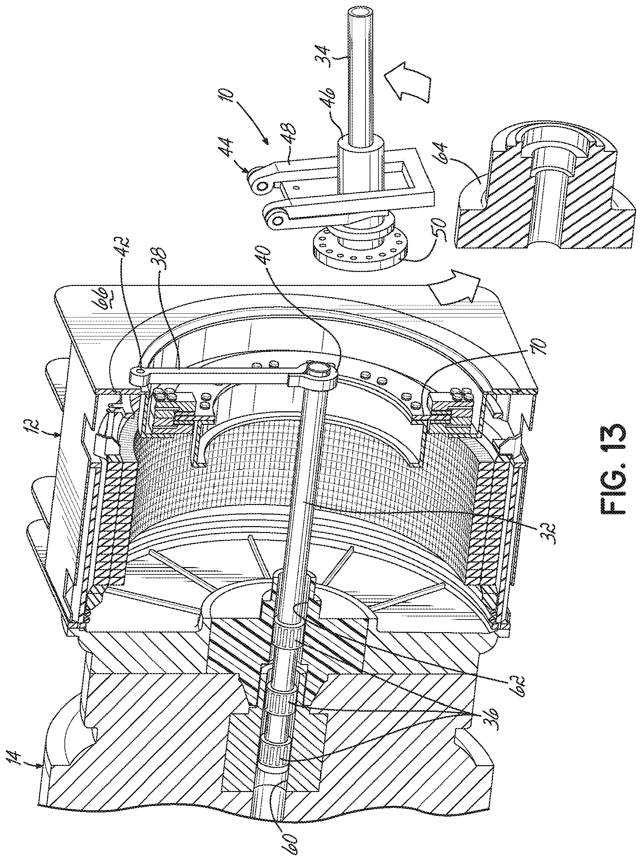

In Fig. 13, the process continues by removing the bolts or other fasteners securing the sliding tool 50 (at apertures 52) to the bearing cassette 64, thereby releasing the bearing cassette 64 for movement by a crane or similar device away from the energy generating unit. To assist with this movement of the bearing cassette 64, the frame element 48 of the end support 44 may be folded or pivoted slightly as shown by the rightmost arrow in Fig. 13 to tilt the sliding tool 50 and bearing cassette 64 downwardly and the opposite end of the proximal tube portion 34 upwardly. The frame element 48 can then be returned to the original position following removal of the bearing cassette 64 from the generator 12 and nacelle. Such steps of the tool chain 10 and tool fixture 110 can be reversed to replace the bearing cassette 64 or other internal components following repair or replacement with a new part.

Accordingly, the tool chain 10, the tool fixture 110, and associated methods set forth in the embodiments described above are capable of concentrically fixing internal components of an energy generating unit of a wind turbine in position (such as the first and second output shafts 60, 62 from the gearbox 14) and also removal and replacement of the internal components within the generator 12 and the gearbox 14. Such removal and replacement of internal components may be advantageously conducted without full disassembly of the generator 12 from the gearbox 14, and without necessitating human operator holding of tools against magnetic forces typically present inside the generator 12. The process steps described above can be repeated any number of times to remove any internal component using the sliding tool 50 and tools connected to the tool fixture 110, as well as to perform other assembly and disassembly steps like connection of the generator 12 and the gearbox 14. The tool fixture 110 of this invention (when used with tool chain 10 or other supporting structures) improves the maintenance and repair of modern designs of energy generating units of wind turbines, making such more cost-efficient and easy to implement. As such, wind turbine downtime can be minimized for such maintenance, which is desirable to wind turbine operators.

In a further embodiment of the invention, the tool fixture 110 may omit the swing arm 122 and pivot joint 124 where the main body 120 and the assembly tool are small enough to fit through the openings and apertures presented by the energy generating unit. In such an embodiment, the main body 120 continues to include the support aperture 130 so that the main body 120 pivots to move the assembly tool(s) between first and second positions for fitting through the openings and apertures, and for working on fasteners of internal components of the energy generating unit. Likewise, the tool fixture 110 continues to include the tool receiver 140 as well in this embodiment. The tool fixture 110 of this embodiment continues to achieve the technical advantages and objects described in detail above, thereby improving the maintenance and repair operations for energy generating units and wind turbines.

While the present invention has been illustrated by a description of various preferred embodiments and while these embodiments have been described in some detail, it is not the intention of the Applicant to restrict or in any way limit the scope of the appended claims to such detail. Additional advantages and modifications will readily appear to those skilled in the art.

## Claims

1. An energy generating unit for a wind turbine, comprising:
a generator (12) and a gearbox (14) operatively connected together, a supporting structure (30) that extends into the energy generating unit, wherein at least the generator (12) includes internal components that may require assembly and disassembly for repair or replacement; and
a tool fixture (110) configured to support one or more assembly tools used to assemble and disassemble the internal components from within the energy generating unit, the tool fixture (110) comprising:
a main body (120) including a support aperture (130) engaging the supporting structure (30) that extends into the energy generating unit; and
a tool receiver (140) configured to secure one or more of the assembly tools against magnetic forces that may be present inside the generator (12), wherein the tool fixture (110) is pivotally movable relative to the supporting structure (30) so that the assembly tools secured to the tool receiver (140) may be moved between a first position in which the tool fixture (110) and the assembly tools can move along the supporting structure (30) into and out of the energy generating unit, and a second position in which the tool fixture (110) positions the assembly tools to reach and work on fasteners located on the internal components within the energy generating unit.

2. The energy generating unit of claim 1, **characterized in that** the tool fixture (110) further comprises:
a swing arm (122) including the tool receiver (140); and
a pivot joint (124) connecting the main body (120) and the swing arm (122) to allow the swing arm (122) to rotate relative to the main body (120) such that the tool fixture (110) moves between the first position sized for moving the tool fixture (110) and the assembly tools along the supporting structure (30) into and out of the energy generating unit, and the second position in which the tool fixture (110) positions the assembly tools to reach and work on fasteners located on the internal components within the energy generating unit.

3. The energy generating unit of claim 2, wherein the support aperture (130) defines a support axis about which the main body (120) can be rotated, and further **characterized in that**:
in the first position, the main body (120) and the swing arm (122) collectively define a reduced radius (R1) measured from the support axis, the reduced radius (R1) allowing the tool fixture to move along the supporting structure (30) through openings and apertures of the generator (12) and of the internal components; and
in the second position, the main body (120) and the swing arm (122) collectively define an increased radius (R2) measured from the support axis, the increased radius (R2) being greater than the reduced radius (R1) so that the assembly tools carried by the tool fixture (110) can reach and work on the fasteners located on the internal components within the energy generating unit.

4. The energy generating unit of claim 2 or claim 3, further **characterized by**:
a swing arm locking mechanism (134) that selectively locks the swing arm (122) from further rotation relative to the main body (120), to thereby retain the tool fixture (110) in specific positions.

5. The energy generating unit of any of the preceding claims, wherein the main body (120) is further **characterized by**:
a locking element (132) located at the support aperture (130) and that actuates to prevent rotation of the main body (120) and the tool fixture (110) relative to the supporting structure (30).

6. The energy generating unit of any of the preceding claims, **characterized by**:
a counterweight (144) coupled to the main body (120) and configured to cancel rotational moments about the support aperture (130) caused by the main body (120) and/or the assembly tools.

7. The energy generating unit of any of the preceding claims, **characterized in that** the tool fixture (110) is mounted on a tool chain (10) configured to remove the internal components from the energy generating unit, and the tool chain (10) is **characterized by**:
a tube (30) including a distal tube portion (32) and a proximal tube portion (34) removably coupled to one another, the tube (30) defining a longitudinal length configured to extend into the energy generating unit;
at least one clamp element (36) located on the distal tube portion (32) and operable to fix the distal tube portion (32) in position relative to the internal components of the energy generating unit; and
a sliding tool (50) configured to translate along the tube (30) between the proximal tube portion (34) and the at least one clamp element (36), the sliding tool (50) configured to be removably secured to the internal components of the energy generating unit to move the internal components along the tube (30) and out of the energy generating unit,
**characterized in that** the tool fixture (110) is also configured to translate along the tube (30) to connect and disconnect fasteners of the internal components, with the tube (30) serving as the supporting structure (30) engaging with the support aperture (130).

8. A wind turbine comprising the energy generating unit according to any of the preceding claims.

9. A method of assembling and/or disassembling components of an energy generating unit for a wind turbine with a tool fixture (110), the energy generating unit including a generator (12) and a gearbox (14) operatively connected together and having internal components, the method comprising:
providing a supporting structure (30) that extends into the energy generating unit;
coupling an assembly tool to a tool receiver (140) of the tool fixture (110);
mounting the tool fixture (110) on the supporting structure (30) by engaging a support aperture (130) of a main body (120) of the tool fixture (110) with the supporting structure (30), with the tool fixture (110) in a first position in which the tool fixture (110) and the assembly tool are collectively sized to fit through openings and apertures defined by the internal components and the energy generating unit;
moving the tool fixture (110) along the supporting structure (30) into an interior of the energy generating unit;
pivoting the tool fixture (110) about the supporting structure (30) to place the tool fixture (110) in a second position in which the assembly tool is positioned by the tool fixture (110) adjacent to fasteners located on the internal components of the energy generating unit to be assembled and/or disassembled; and
using the assembly tool to work on the fasteners, wherein the tool fixture (110) secures the assembly tool and the fasteners against magnetic forces that may be present inside the interior of the energy generating unit.

10. The method of claim 9, further **characterized by**:
pivoting a swing arm (122) of the tool fixture (110) relative to the main body (120) of the tool fixture (110) to place the tool fixture (110) in the first position sized to fit through openings and apertures defined by components of the energy generating unit; and
pivoting the swing arm (122) relative to the main body (120) after moving the tool fixture (110) into the interior of the energy generating unit to place the tool fixture (110) in the second position configured to position the assembly tool adjacent to the fasteners located on the internal components of the energy generating unit.

11. The method of claim 10, further **characterized in that**:
in the first position, the main body (120) and the swing arm (122) collectively define a reduced radius (R1) measured from a support axis at which the tool fixture (110) connects to the supporting structure (30); and
in the second position, the main body (120) and the swing arm (122) collectively define an increased radius (R2) measured from the support axis, the increased radius (R2) being greater than the reduced radius (R1).

12. The method of claim 10 or claim 11, further **characterized by**:
actuating a swing arm locking mechanism (134) to lock the swing arm (122) from further rotation relative to the main body (120), thereby maintaining the tool fixture (110) in a position.

13. The method of any of claims 9 through 12, further **characterized by**:
actuating a locking element (132) located at the support aperture (130) to prevent rotation of the main body (120) and the tool fixture (110) relative to the supporting structure (30).

14. The method of any of claims 9 through 13, further **characterized by**:
moving a counterweight (144) coupled to the main body (120) to cancel rotational moments about a support axis at which the tool fixture (110) connects to the supporting structure (30).

## Patentansprüche

1. Energieerzeugungseinheit für eine Windkraftanlage, umfassend:
einen Generator (12) und ein Getriebe (14), die betriebsmäßig miteinander verbunden sind,
eine Trägerstruktur (30), die sich in die Energieerzeugungseinheit hinein erstreckt,
wobei zumindest der Generator (12) interne Komponenten beinhaltet, die zur Reparatur oder zum Austausch montiert und demontiert werden müssen; und
eine Werkzeughalterung (110), die dazu ausgelegt ist, ein oder mehrere Montagewerkzeuge zu tragen, die verwendet werden, um die internen Komponenten innerhalb der Energieerzeugungseinheit zu montieren und zu demontieren, wobei die Werkzeughalterung (110) Folgendes umfasst:
einen Hauptkörper (120), der eine Halteöffnung (130) beinhaltet, die in die Trägerstruktur (30) eingreift, die sich in die Energieerzeugungseinheit erstreckt; und
eine Werkzeugaufnahme (140), die dazu ausgelegt ist, eines oder mehrere der Montagewerkzeuge gegen magnetische Kräfte zu sichern, die im Inneren des Generators (12) vorhanden sein können,
wobei die Werkzeughalterung (110) relativ zur Trägerstruktur (30) schwenkbar ist, sodass die an der Werkzeugaufnahme (140) gesicherten Montagewerkzeuge zwischen einer ersten Position, in der sich die Werkzeughalterung (110) und die Montagewerkzeuge entlang der Trägerstruktur (30) in die Energieerzeugungseinheit hinein und aus ihr heraus bewegen können, und einer zweiten Position bewegt werden können, in der die Werkzeughalterung (110) die Montagewerkzeuge so positioniert, dass sie die an den internen Komponenten innerhalb der Energieerzeugungseinheit befindlichen Befestigungsmittel erreichen und daran arbeiten können.

2. Energieerzeugungseinheit nach Anspruch 1, **dadurch gekennzeichnet, dass** die Werkzeughalterung (110) weiter Folgendes umfasst:
einen Schwenkarm (122), der die Werkzeugaufnahme (140) beinhaltet; und
ein Drehgelenk (124), das den Hauptkörper (120) und den Schwenkarm (122) so verbindet, dass sich der Schwenkarm (122) relativ zum Hauptkörper (120) drehen kann, sodass sich die Werkzeughalterung (110) zwischen der ersten Position, die so bemessen ist, dass sie die Werkzeughalterung (110) und die Montagewerkzeuge entlang der Trägerstruktur (30) in die Energieerzeugungseinheit hinein und aus ihr heraus bewegt, und der zweiten Position bewegt, in der die Werkzeughalterung (110) die Montagewerkzeuge so positioniert, dass sie die an den internen Komponenten innerhalb der Energieerzeugungseinheit befindlichen Befestigungsmittel erreichen und daran arbeiten können.

3. Energieerzeugungseinheit nach Anspruch 2, wobei die Halteöffnung (130) eine Trägerachse definiert, um die der Hauptkörper (120) gedreht werden kann, und weiter **dadurch gekennzeichnet, dass**:
in der ersten Position der Hauptkörper (120) und der Schwenkarm (122) gemeinsam einen reduzierten Radius (R1), gemessen von der Trägerachse, definieren, wobei der reduzierte Radius (R1) es der Werkzeughalterung ermöglicht, sich entlang der Trägerstruktur (30) durch Öffnungen und Aperturen des Generators (12) und der internen Komponenten zu bewegen; und
in der zweiten Position der Hauptkörper (120) und der Schwenkarm (122) gemeinsam einen vergrößerten Radius (R2), gemessen von der Trägerachse, definieren, wobei der vergrößerte Radius (R2) größer ist als der verkleinerte Radius (R1), sodass die von der Werkzeughalterung (110) getragenen Montagewerkzeuge die an den inneren Komponenten innerhalb der Energieerzeugungseinheit befindlichen Befestigungsmittel erreichen und daran arbeiten können.

4. Energieerzeugungseinheit nach Anspruch 2 oder Anspruch 3, weiter **gekennzeichnet durch**:
einen Schwenkarm-Verriegelungsmechanismus (134), der den Schwenkarm (122) selektiv gegen weitere Drehung relativ zum Hauptkörper (120) verriegelt, um dadurch die Werkzeughalterung (110) in bestimmten Positionen zu halten.

5. Energieerzeugungseinheit nach einem der vorstehenden Ansprüche, wobei der Hauptkörper (120) weiter **gekennzeichnet ist durch**:
ein Verriegelungselement (132), das sich an der Halteöffnung (130) befindet und das betätigt wird, um eine Drehung des Hauptkörpers (120) und der Werkzeughalterung (110) relativ zu der Trägerstruktur (30) zu verhindern.

6. Energieerzeugungseinheit nach einem der vorstehenden Ansprüche, **gekennzeichnet durch**:
ein Gegengewicht (144), das mit dem Hauptkörper (120) gekoppelt und dazu ausgelegt ist, durch den Hauptkörper (120) und/oder die Montagewerkzeuge verursachte Drehmomente um die Halteöffnung (130) aufzuheben.

7. Energieerzeugungseinheit nach einem der vorstehenden Ansprüche, **dadurch gekennzeichnet, dass** die Werkzeughalterung (110) an einer Werkzeugkette (10) angebracht ist, die dazu ausgelegt ist, die internen Komponenten aus der Energieerzeugungseinheit zu entfernen, und dass die Werkzeugkette (10) **gekennzeichnet ist durch**:
ein Rohr (30), das einen distalen Rohrabschnitt (32) und einen proximalen Rohrabschnitt (34) entfernbar miteinander gekoppelt beinhaltet, wobei das Rohr (30) eine Längsrichtung definiert, die so konfiguriert ist, dass sie sich in die Energieerzeugungseinheit erstreckt;
zumindest ein Klemmelement (36), das auf dem distalen Rohrabschnitt (32) angeordnet ist und betriebsfähig ist, den distalen Rohrabschnitt (32) in einer Position relativ zu den inneren Komponenten der Energieerzeugungseinheit zu fixieren; und
ein Gleitwerkzeug (50), das dazu ausgelegt ist, entlang des Rohrs (30) zwischen dem proximalen Rohrabschnitt (34) und dem mindestens einen Klemmelement (36) verschoben zu werden, wobei das Gleitwerkzeug (50) dazu ausgelegt ist, lösbar an den inneren Komponenten der Energieerzeugungseinheit befestigt zu werden, um die inneren Komponenten entlang des Rohrs (30) und aus der Energieerzeugungseinheit heraus zu bewegen,
**dadurch gekennzeichnet, dass** die Werkzeughalterung (110) auch dazu ausgelegt ist, sich entlang des Rohrs (30) zu verschieben, um Befestigungsmittel der inneren Komponenten zu verbinden und zu lösen, wobei das Rohr (30) als Trägerstruktur (30) dient, die mit der Halteöffnung (130) in Eingriff steht.

8. Windkraftanlage, umfassend die Energieerzeugungseinheit nach einem der vorstehenden Ansprüche.

9. Verfahren zum Montieren und/oder Demontieren von Komponenten einer Energieerzeugungseinheit für eine Windkraftanlage mit einer Werkzeughalterung (110), wobei die Energieerzeugungseinheit einen Generator (12) und ein Getriebe (14) umfasst, die betriebsmäßig miteinander verbunden sind und interne Komponenten aufweisen, wobei das Verfahren Folgendes umfasst:
Bereitstellung einer Trägerstruktur (30), die sich in die Energieerzeugungseinheit hinein erstreckt;
Kopplung eines Montagewerkzeugs mit einer Werkzeugaufnahme (140) der Werkzeughalterung (110);
Montieren der Werkzeughalterung (110) an der Trägerstruktur (30) durch Ineinandergreifen einer Halteöffnung (130) eines Hauptkörpers (120) der Werkzeughalterung (110) mit der Trägerstruktur (30), wobei sich die Werkzeughalterung (110) in einer ersten Position befindet, in der die Werkzeughalterung (110) und das Montagewerkzeug gemeinsam so bemessen sind, dass sie durch Öffnungen und Aperturen passen, die von den internen Komponenten und der Energieerzeugungseinheit definiert werden;
Bewegen der Werkzeughalterung (110) entlang der Trägerstruktur (30) in das Innere der Energieerzeugungseinheit;
Schwenken der Werkzeughalterung (110) um die Trägerstruktur (30), um die Werkzeughalterung (110) in eine zweite Position zu bringen, in der das Montagewerkzeug durch die Werkzeughalterung (110) benachbart zu Befestigungsmitteln positioniert ist, die sich an den inneren Komponenten der zu montierenden und/oder zu demontierenden Energieerzeugungseinheit befinden; und
Verwendung des Montagewerkzeugs, um an den Befestigungsmitteln zu arbeiten, wobei die Werkzeughalterung (110) das Montagewerkzeug und die Befestigungsmittel gegen magnetische Kräfte sichert, die im Inneren der Energieerzeugungseinheit vorhanden sein können.

10. Verfahren nach Anspruch 9, weiter **gekennzeichnet durch**:
Schwenken eines Schwenkarms (122) der Werkzeughalterung (110) relativ zum Hauptkörper (120) der Werkzeughalterung (110), um die Werkzeughalterung (110) in die erste Position zu bringen, die so bemessen ist, dass sie durch Öffnungen und Aperturen passt, die durch Komponenten der Energieerzeugungseinheit definiert sind; und
Schwenken des Schwenkarms (122) relativ zum Hauptkörper (120) nach dem Bewegen der Werkzeughalterung (110) in das Innere der Energieerzeugungseinheit, um die Werkzeughalterung (110) in die zweite Position zu bringen, die dazu ausgelegt ist, das Montagewerkzeug neben den Befestigungsmitteln zu positionieren, die sich an den inneren Komponenten der Energieerzeugungseinheit befinden.

11. Verfahren nach Anspruch 10, weiter **dadurch gekennzeichnet, dass**:
in der ersten Position der Hauptkörper (120) und der Schwenkarm (122) gemeinsam einen reduzierten Radius (R1) definieren, gemessen von einer Trägerachse, an der die Werkzeughalterung (110) mit der Trägerstruktur (30) verbunden ist; und
in der zweiten Position der Hauptkörper (120) und der Schwenkarm (122) gemeinsam einen vergrößerten Radius (R2), gemessen von der Trägerachse, definieren, wobei der vergrößerte Radius (R2) größer ist als der reduzierte Radius (R1).

12. Verfahren nach Anspruch 10 oder Anspruch 11, weiter **gekennzeichnet durch**:
Betätigen eines Schwenkarm-Verriegelungsmechanismus (134), um den Schwenkarm (122) gegen weitere Drehung relativ zum Hauptkörper (120) zu verriegeln, wodurch die Werkzeughalterung (110) in einer Position gehalten wird.

13. Verfahren nach einem der Ansprüche 9 bis 12, weiter **gekennzeichnet durch**:
Betätigung eines Verriegelungselements (132), das sich an der Halteöffnung (130) befindet, um eine Drehung des Hauptkörpers (120) und der Werkzeughalterung (110) relativ zur Trägerstruktur (30) zu verhindern.

14. Verfahren nach einem der Ansprüche 9 bis 13, weiter **gekennzeichnet durch**:
Bewegen eines mit dem Hauptkörper (120) gekoppelten Gegengewichts (144) zum Aufheben von Drehmomenten um eine Trägerachse, an der die Werkzeughalterung (110) mit der Trägerstruktur (30) verbunden ist.

## Revendications

1. Unité de production d'énergie pour une éolienne, comprenant :
un générateur (12) et une boîte d'engrenages (14) accouplés fonctionnellement ensemble,
une structure de support (30) qui s'étend dans l'unité de production d'énergie,
dans laquelle au moins le générateur (12) inclut des composants internes qui peuvent exiger un montage et un démontage pour une réparation ou un remplacement ; et
un porte-outils (110) configuré pour supporter un ou plusieurs outils de montage utilisés pour monter et démonter les composants internes de l'unité de production d'énergie, le porte-outils (110) comprenant :
un corps principal (120) incluant une ouverture de support (130) se mettant en prise avec la structure de support (30) qui s'étend dans l'unité de production d'énergie ; et
un récepteur d'outils (140) configuré pour assujettir un ou plusieurs des outils de montage contre des forces magnétiques qui peuvent être présentes à l'intérieur du générateur (12),
dans laquelle le porte-outils (110) est mobile de façon pivotante par rapport à la structure de support (30) de sorte que les outils de montage assujettis au récepteur d'outils (140) peuvent être déplacés entre une première position dans laquelle le porte-outils (110) et les outils de montage peuvent se déplacer le long de la structure de support (30) vers l'intérieur et l'extérieur de l'unité de production d'énergie, et une seconde position dans laquelle le porte-outils (110) positionne les outils de montage pour accéder, afin d'intervenir dessus, aux fixations situées sur les composants internes à l'intérieur de l'unité de production d'énergie.

2. Unité de production d'énergie selon la revendication 1, **caractérisée en ce que** le porte-outils (110) comprend en outre :
un bras oscillant (122) incluant le récepteur d'outils (140) ; et
une articulation pivotante (124) reliant le corps principal (120) et le bras oscillant (122) pour permettre au bras oscillant (122) de tourner par rapport au corps principal (120) de telle sorte que le porte-outils (110) se déplace entre la première position dimensionnée pour déplacer le porte-outils (110) et les outils de montage le long de la structure de support (30) vers l'intérieur et l'extérieur de l'unité de production d'énergie, et la seconde position dans laquelle le porte-outils (110) positionne les outils de montage pour accéder, afin d'intervenir dessus, aux fixations situées sur les composants internes à l'intérieur de l'unité de production d'énergie.

3. Unité de production d'énergie selon la revendication 2, dans laquelle l'ouverture de support (130) définit un axe de support autour duquel le corps principal (120) peut tourner, et **caractérisée en outre en ce que** :
dans la première position, le corps principal (120) et le bras oscillant (122) définissent collectivement un rayon réduit (R1) mesuré à partir de l'axe de support, le rayon réduit (R1) permettant au porte-outils de se déplacer le long de la structure de support (30) à travers des orifices et ouvertures du générateur (12) et des composants internes ; et
dans la seconde position, le corps principal (120) et le bras oscillant (122) définissent collectivement un rayon accru (R2) mesuré à partir de l'axe de support, le rayon accru (R2) étant supérieur au rayon réduit (R1) de sorte que les outils de montage portés par le porte-outils (110) peuvent accéder, pour intervenir dessus, aux fixations situées sur les composants internes à l'intérieur de l'unité de production d'énergie.

4. Unité de production d'énergie selon la revendication 2 ou la revendication 3, **caractérisée en outre par** :
un mécanisme de blocage de bras oscillant (134) qui bloque sélectivement le bras oscillant (122) pour l'empêcher de tourner davantage par rapport au corps principal (120), pour retenir ainsi le porte-outils (110) dans des positions spécifiques.

5. Unité de production d'énergie selon l'une quelconque des revendications précédentes, dans laquelle le corps principal (120) est en outre **caractérisé par** :
un élément de blocage (132) situé au niveau de l'ouverture de support (130) et qui agit pour empêcher une rotation du corps principal (120) et du porte-outils (110) par rapport à la structure de support (30).

6. Unité de production d'énergie selon l'une quelconque des revendications précédentes, **caractérisée par** :
un contrepoids (144) couplé au corps principal (120) et configuré pour annuler les moments de rotation autour de l'ouverture de support (130) causés par le corps principal (120) et/ou les outils de montage.

7. Unité de production d'énergie selon l'une quelconque des revendications précédentes, **caractérisée en ce que** le porte-outils (110) est monté sur une chaîne d'outils (10) configurée pour retirer les composants internes de l'unité de production d'énergie, et la chaîne d'outils (10) est **caractérisée par** :
un tube (30) incluant une partie de tube distale (32) et une partie de tube proximale (34) couplées de manière amovible l'une à l'autre, le tube (30) définissant une longueur longitudinale configurée pour s'étendre dans l'unité de production d'énergie ;
au moins un élément de serrage (36) situé sur la partie de tube distale (32) et pouvant servir à immobiliser la partie de tube distale (32) dans une position par rapport aux composants internes de l'unité de production d'énergie ; et
un outil coulissant (50) configuré pour effectuer une translation le long du tube (30) entre la partie de tube proximale (34) et le au moins un élément de serrage (36), l'outil coulissant (50) étant configuré pour être assujetti de manière amovible à des composants internes de l'unité de production d'énergie pour déplacer les composants internes le long du tube (30) et à l'extérieur de l'unité de génération d'énergie,
**caractérisée en ce que** le porte-outils (110) est également configuré pour effectuer une translation le long du tube (30) pour accoupler et désaccoupler les fixations des composants internes, le tube (30) servant de structure de support (30) se mettant en prise avec l'ouverture de support (130).

8. Éolienne comprenant l'unité de production d'énergie selon l'une quelconque des revendications précédentes.

9. Procédé de montage et/ou de démontage de composants d'une unité de production d'énergie pour une éolienne avec un porte-outils (110), l'unité de production d'énergie incluant un générateur (12) et une boîte d'engrenages (14) accouplés fonctionnellement ensemble et présentant des composants internes, le procédé comprenant :
la fourniture d'une structure de support (30) qui s'étend dans l'unité de production d'énergie ;
le couplage d'un outil de montage à un récepteur d'outils (140) du porte-outils (110) ;
le montage du porte-outils (110) sur la structure de support (30) en mettant en prise une ouverture de support (130) d'un corps principal (120) du porte-outils (110) avec la structure de support (30), le porte-outils (110) étant dans une première position dans laquelle le porte-outils (110) et l'outil de montage sont dimensionnés collectivement pour s'adapter aux orifices et ouvertures définis par les composants internes et l'unité de production d'énergie ;
le déplacement du porte-outils (110) le long de la structure de support (30) à l'intérieur de l'unité de production d'énergie ;
le pivotement du porte-outils (110) autour de la structure de support (30) pour placer le porte-outils (110) dans une seconde position dans laquelle l'outil de montage est positionné par le porte-outils (110) de manière adjacente aux fixations situées sur les composants internes de l'unité de production d'énergie devant être montés et/ou démontés ; et
l'utilisation de l'outil de montage pour intervenir sur les fixations, dans lequel le porte-outils (110) assujettit l'outil de montage et les fixations contre des forces magnétiques qui peuvent être présentes à l'intérieur de l'unité de production d'énergie.

10. Procédé selon la revendication 9, **caractérisé en outre par** :
le pivotement d'un bras oscillant (122) du porte-outils (110) par rapport au corps principal (120) du porte-outils (110) pour placer le porte-outils (110) dans la première position dimensionnée pour s'adapter dans les orifices et ouvertures définis par des composants de l'unité de production d'énergie ; et
le pivotement du bras oscillant (122) par rapport au corps principal (120) après déplacement du porte-outils (110) à l'intérieur de l'unité de production d'énergie pour placer le porte-outils (110) dans la seconde position configurée pour positionner l'outil de montage de manière adjacente aux fixations situées sur les composants internes de l'unité de production d'énergie.

11. Procédé selon la revendication 10, **caractérisé en outre en ce que** :
dans la première position, le corps principal (120) et le bras oscillant (122) définissent collectivement un rayon réduit (R1) mesuré à partir d'un axe de support au niveau duquel le porte-outils (110) s'accouple à la structure de support (30) ;
dans la seconde position, le corps principal (120) et le bras oscillant (122) définissent collectivement un rayon accru (R2) mesuré à partir de l'axe de support, le rayon accru (R2) étant supérieur au rayon réduit (R1).

12. Procédé selon la revendication 10 ou la revendication 11, **caractérisé en outre par** :
l'actionnement d'un mécanisme de blocage de bras oscillant (134) pour bloquer sélectivement le bras oscillant (122) pour l'empêcher de tourner davantage par rapport au corps principal (120), retenant ainsi le porte-outils (110) dans une position.

13. Procédé selon l'une quelconque des revendications 9 à 12, **caractérisé en outre par** :
l'actionnement d'un élément de blocage (132) situé au niveau de l'ouverture de support (130) et qui agit pour empêcher une rotation du corps principal (120) et du porte-outils (110) par rapport à la structure de support (30).

14. Procédé selon l'une quelconque des revendications 9 à 13, **caractérisé en outre par** :
le déplacement d'un contrepoids (144) couplé au corps principal (120) pour annuler les moments de rotation autour d'un axe de support au niveau duquel le porte-outils (110) s'accouple à la structure de support (30).
